# EUROPÄISCHE PATENTANMELDUNG

(11) **EP 4 762 938 A1**
(43) Veröffentlichungstag der Anmeldung: **24.06.2026**
(21) Anmeldenummer: 24222309.7
(22) Anmeldetag: 20.12.2024
(51) Int. Cl.: A23F 5/12, A23F 5/14, A23F 5/38, A23P 10/30, B65D 65/46, B65D 85/804

(54) **KAPSEL UND VERWENDUNG EINER KAPSEL ZUR GETRÄNKEZUBEREITUNG, VERFAHREN ZUM HERSTELLEN EINER KAPSEL**

(71) Anmelder: Delica AG, 5033 Buchs AG (CH)
(72) Erfinder: Maschke, Ferdinand, 4056 Basel (CH); Siefarth, Caroline, 4102 Binningen (CH); Thilla, Tim, 79576 Weil am Rhein (DE); Affolter, Roland, 5103 Möriken (CH)
(74) Vertreter: Hepp Wenger Ryffel AG

(57) **Zusammenfassung**

Kapsel zur Getränkezubereitung umfassend ein Kernmaterial und eine Hülle, wobei das Kernmaterial kristallisierbare Stoffe enthält. Die Hülle umfasst einen Kristallisationsverzögerer und/oder die Hülle ist hydrophobiert.

## Beschreibung

Die vorliegende Erfindung betrifft eine Kapsel zur Getränkezubereitung, die Verwendung der Kapsel zur Getränkezubereitung sowie ein Verfahren zum Herstellen einer Kapsel gemäss den Oberbegriffen der unabhängigen Ansprüche.

Aus dem Stand der Technik sind Kapseln zur Getränkezubereitung bekannt. Kapseln mit einer Hülle aus Aluminium oder Kunststoffen werden vielfach verwendet, weisen jedoch den Nachteil der erschwerten Rezyklierbarkeit auf. Ebenso sind vermehrt auch Kapseln erhältlich, welche einen mit Getränkesubstanz befüllten kompostierbare Kapselkörper aufweisen.

Relativ neu auf dem Markt sind Kapseln, welche im Wesentlichen einem beschichteten Pressling aus einer Getränkesubstanz entsprechen. Es hat sich gezeigt, dass bei koffeinhaltigen Getränkesubstanzen die beschichteten Presslinge vielfach auf ihrer Oberfläche einen Flaum ausbilden, welcher durch nadelförmige Koffeinkristalle gebildet wird. Meist tritt die Kristallisation erst auf, wenn die Verpackung der Kapseln geöffnet wird und die Kapseln über einen gewissen Zeitraum mit der Umgebungsluft in Kontakt treten. Dieser Koffeinflaum beeinflusst die optische Erscheinung der Kapseln und kann durch den Benutzer, obwohl unbedenklich, leicht mit mikrobiellem Wachstum verwechselt werden.

Es ist Aufgabe der Erfindung, die Nachteile des Standes der Technik zu überwinden. Insbesondere soll eine Kapsel bereitgestellt werden, die auch über einen längeren Zeitraum eine ansprechende optische Erscheinung hat.

Diese Aufgabe wird durch die in den unabhängigen Patentansprüchen definierten Vorrichtungen gelöst. Weitere Ausführungsformen ergeben sich aus den abhängigen Patentansprüchen.

Eine erfindungsgemässe Kapsel zur Getränkezubereitung umfasst ein Kernmaterial, insbesondere umfassend einen Pressling, und eine Hülle. Dabei enthält das Kernmaterial und/oder Hüllmaterial kristallisierbare Stoffe. Die Hülle weist einen Kristallisationsverzögerer auf, insbesondere ausgewählt aus der Gruppe umfassend Chlorogensäuren, Zitronensäure, Apfelfasern (≤ 50 um Partikelgrösse), Hydroxypropylmethylcellulose (HPMC) und Polyole. Alternativ oder ergänzend ist die Hülle zur Kristallisationsverzögerung hydrophobiert. Hierfür eignet sich insbesondere
a) eine Wachspolitur, bevorzugt umfassend ein natürliches Wachs wie Carnaubawachs, Bienenwachs oder Reiskleiewachs, und/oder
b) eine Hydrophobierung der Hülle durch Zusatz bestimmter Lipide, bevorzugt pflanzlicher Öle aus Sonnenblume, Soja, Weizen, und/oder
c) eine anorganische Barriere, insbesondere Schichtsilikat enthaltend, und/oder
d) eine Hydrophobierung insbesondere durch Polymer-Graphting.

Unter "kristallisierbaren Stoffen" werden hier und im Folgenden Stoffe verstanden, welche unter herkömmlichen Lagerbedingungen in der Umgebungsluft (23±10 °C, 50±20% relative Luftfeuchtigkeit) auskristallisieren. Beispielsweise können solche kristallisierbaren Stoffe Koffein, Aminosäuren, Polyole, Zucker oder Salze sein.

Unter einem "Kristallisationsverzögerer" wird hier und im Folgenden ein Mittel verstanden, welches die Kristallisation, insbesondere die Koffeinkristallisation, verzögert, insbesondere verhindert.

Unter einer "hydrophobierten Hülle" wird hier und nachfolgend verstanden, dass die Hülle der Kapsel derart aufgebaut oder behandelt ist, dass durch die hydrophobe Beschaffenheit eine Migration von wasserlöslichen Substanzen oder Spurenelementen, insbesondere von Koffein, aus dem Kernmaterial und/oder der Hülle an die Oberfläche der Kapsel nur verzögert erfolgt, insbesondere verhindert wird.

Eine Kristallisation der Stufe 1 soll frühestens nach 40 Tagen ab Kontakt mit der Umgebungsluft (23±3 °C, 50% relative Luftfeuchtigkeit) an der Oberfläche der Kapsel erkennbar sein. Dabei wird für die Beurteilung der Kristallisation das nachfolgende Stufenmodell verwendet:

| | |
|---|---|
| Stufe 0: | keine Kristallisation, |
| Stufe 1: | feinste Kristalle fein auf Oberfläche verteilt, |
| Stufe 2: | erste Bereiche feiner Kristalle von blossem Auge sichtbar, |
| Stufe 3: | Bereiche von Kristallen wachsen zusammen, |
| Stufe 4: | Oberfläche noch nicht vollflächig bedeckt, |
| Stufe 5: | gesamte Oberfläche vollflächig mit Kristallen bedeckt. |

Dadurch, dass die Hülle einen Kristallisationsverzögerer umfasst, wird aktiv die Migration des im Kernmaterial und/oder Hüllmaterial enthaltenen kristallisierbaren Stoffes an die Oberfläche der Hülle beeinflusst, beispielsweise durch Komplexierung. Zwar kann es noch immer zu einer Kristallisation kommen, diese wird jedoch wesentlich verzögert. Bevorzugt wird die Kristallisation ganz verhindert.

Bei einer, mit beispielsweise einer Wachspolitur, hydrophobierten Hülle wird ebenfalls der eigentliche Kristallisationsprozess verzögert, indem die Migration des zur Kristallisation benötigten Stoffes des Kern- oder Hüllmaterials an die Oberfläche verzögert oder verhindert wird.

Die Hülle kann in einem Nassauftrag aufgebracht sein. Ein solcher Nassauftrag, meist mittels einer wässrigen Lösung, ermöglicht eine rundum geschlossene Hülle ohne Nahtstellten. Durch den Nassauftrag wird aber das Kernmaterial mit Feuchtigkeit versehen, sodass das Koffein sich aus dem Kernmaterial löst. Unter Nassauftrag wird explizit auch das Auftragen einer hochviskosen Lösung verstanden, beispielsweise mittels Spraycoating.

Die Hülle kann auf Alginat basieren. Beispielsweise wird eine Hülle durch Nassauftrag einer wässrigen 1.55 % (w/w) Alginat-Lösung mit 1.1 % (w/w) Cellulose und 9.3 % (w/w) Sorbitol erzeugt, gefolgt von einem kurzen Eintauche einer 10 % (w/w) Calciumchlorid-Lösung.

Der Kristallisationsverzögerer kann dabei direkt in der wässrigen Alginat-Lösung eingebunden oder durch ein zusätzliches Eintauchen in eine Kristallisationsverzögerer-Lösung in der Hülle aufgebracht werden.

Das Kernmaterial kann ein Pulver oder eine Pulvermischung aufweisen, ausgewählt aus der Gruppe umfassend: Kaffee, Kaffeemischungen, Kaffeeersatzmischungen, Tee, Teemischungen, Kakao, Kakaomischungen, Trinkschokolade, Milchpulver, Milchkaffeemischungen, Fruchtmilch, veganer Milchersatz, Instantkaffee, Kaffee-Ersatz-Produkte und Trockensuppe, und Kombinationen davon.

Die Kapsel kann kompostierbar, insbesondere heimkompostierbar gemäss den Zertifizierungsprogrammen NF T 51-800 und AS 5810, sein. Dabei wird unter "kompostierbar" verstanden, das Material gemäss den Zertifizierungsprogrammen NF T 51-800:2015-11-14 (Plastics - Specifications for plastics suitable for home composting) und AS 5810:2010 (Biodegradable plastics - Biodegradable plastics suitable for home composting) zumindest heimkompostierbar ist. Dies bedeutet eine Zersetzung (biodegradation) von mindestens 90% des Materials unter Freisetzung von CO₂ innerhalb von 12 Monaten bei einer Temperatur von 25±5 °C sowie eine Fragmentierung (desintegration) von mindestens 90% des Materials innerhalb von 6 Monaten bei einer Temperatur von 25±5 °C. Ein aufwändiges Entsorgen oder Recycling der gebrauchten Kapsel erübrigt sich somit für den Benutzer. Die Kapsel kann dem Haushalt-Kompost zugeführt werden.

Die Kapsel kann eine Form aufweisen ausgewählt aus der Gruppe Kugel, Ellipsoid, Würfel, Quader, Zylinder, Linse, Prisma, Kegel, Kegelstumpf, Pyramide, Pyramidenstumpf, Torus, Tetraeder, Oktaeder, Dodekaeder, Ikosaeder und Kaffeebohne. Selbstverständlich sind auch andere Formen denkbar, eine Vielzahl solcher Formen sind im Stand der Technik für entsprechende Kapseln bereits bekannt. Bevorzugt ist die Kapsel kugelförmig. Solche geometrischen Formen, insbesondere wenn diese symmetrisch ausgestaltet sind, sind einfach herstellbar. Wenn die Form der Kapsel rotationssymmetrisch ist, kann die Kapsel beispielsweise durch eine Rollbewegung einer Getränkezubereitungsmaschine zugeführt werden. Die Verwendung wird für den Benutzer nochmals einfacher.

Die Kapsel kann in trockenem Zustand eine maximale Kraft in einem Bruchfestigkeitstest von mindestens 30 N, bevorzugt mindestens 50 N und besonders bevorzugt mindestens 80 N aufweisen.

Für den Bruchfestigkeitstest wird die Kapsel zwischen zwei parallelen Platten einer Zug-Druck-Prüfmaschine (beispielsweise mit einem Kraftaufnehmer Xforce P der Firma Zwick/Roell ausgestattet) positioniert. Dabei wird die Kapsel mittig auf der unteren Platte in Extraktionsrichtung, im Falle eines drehsymmetrischen Presslings, beispielsweise mit Kugel- oder Würfelform, in Pressrichtung ausgerichtet. Die Platten weisen einen Durchmesser auf, welcher wenigstens 50 % grösser ist als der maximale Kapseldurchmesser. Die parallelen Platten werden langsam zusammengefahren und ein Kraft-Weg-Diagramm aufgezeichnet. Die Belastung wird erhöht bis zur Beschädigung der Hülle. Gleichzeitig mit diesem Anriss oder Bruch ist ein Kraftabfall festzustellen. Wenn die gemessene Kraft unter die Kraftabfallschwelle von 40 % der maximalen Kraft absinkt, wird der Bruchfestigkeitstest beendet. Die maximale gemessene Kraft ohne Beschädigung der Hülle wird als Bruchfestigkeit ausgegeben.

Die Hülle der Kapsel kann eine Dicke von mindestens 50 µm, bevorzugt mindestens 80 µm, besonders bevorzugt mindestens 100 µm, aufweisen. Die Dicke bezieht sich dabei auf die trockene Hülle.

Die getrocknete Hülle kann eine Feuchtigkeit im Bereich zwischen 7 % und 12 % (w/w) aufweisen. Die Gesamtrestfeuchte der Kapsel, beispielsweise mit Kaffee im Inneren, kann nach entsprechender Trocknung bevorzugt kleiner 5 % (w/w) betragen.

Die Hülle kann wenigstens eine Schicht, umfassend wenigstens ein Polysaccharid aufweisen, ausgewählt aus der Gruppe bestehend aus: Alginate, Stärken, modifizierte Stärken, Cellulosen, Chitin, Chitosan, Carragenen, Pektine, Agar, Xanthan, Gellan, Dextrane, Galactomannan, Glucomannan, Guaran, Carubin, Gummi Arabicum, Scleroglucan, Pullulan, Derivate oder Mischungen davon, bevorzugt Alginat.

Die Hülle kann Fasern enthalten, vorzugsweise ausgewählt aus der Gruppe bestehend aus: Alginat-Fasern, Cellulose-Fasern; ViskoseFasern; PLA-Fasern; mineralische Fasern, vorzugsweise aus Siliziumdioxid; Kunststofffasern, vorzugsweise Aramid-, Polyethylen- und Polyamid-Fasern; oder Derivate davon. Als Cellulosederivat ist beispielsweise Hydroxypropylmethylcellulose (HPMC) denkbar.

Die Fasern führen zu einer zusätzlichen Verstärkung der Hülle. Neben der Verstärkung der Hülle können Fasern auch die Blasenbildung beim Aufbringen der Hülle verringern oder ganz verhindern.

Ein weiterer Aspekt der vorliegenden Erfindung betrifft ein Verfahren zum Herstellen einer Kapsel, insbesondere einer Kapsel wie vorgängig beschrieben. Dabei umfasst das Verfahren wenigstens die folgenden Schritte:
- Bereitstellen eines Kernmaterials, vorzugsweise in Form eines Presslings,
- Aufbringen einer Hülle durch Eintauchen des Kernmaterials in wenigstens eine wässrige Lösung oder durch Überziehen oder Besprühen des Kernmaterials mit wenigstens einer wässrigen Lösung,
- Trocknen des Kernmaterials und der aufgebrachten Hülle.

Dabei umfasst wenigstens eine der wässrigen Lösungen einen Kristallisationsverzögerer und/oder die Hülle wird hydrophobiert.

Wenn das Kernmaterial bereits in Form eines Presslings bereitgestellt wird, erleichtert sich das Handling des Kernmaterials erheblich. Eine Hülle kann somit durch Eintauchen oder Besprühen besonders einfach aufgebracht werden. Bei einem losen Bereitstellen des Kernmaterials wird die Hülle vorzugsweise über das Kernmaterial übergezogen. Nach dem Aufbringen der Hülle wird diese getrocknet, wobei das Kernmaterial, sofern es Feuchtigkeit aufgenommen hat, ebenfalls getrocknet wird. Um die Feuchtigkeitsaufnahme des Kernmaterials möglichst klein zu halten, hat sich ein Bestäuben des Presslings mit Calciumlactat-Pulver als vorteilhaft erwiesen. Insbesondere wenn das Aufbringen der Hülle durch Eintauchen oder Besprühen mit einer wässrigen Alginat-Lösung erfolgt, bewirkt das Calciumlactat-Pulver ein sofortiges Gelieren des Alginats, so dass keine weitere Feuchtigkeit in das Kernmaterial eindringen kann. Durch ein zusätzliches Eintauchen des Presslings in eine Calciumchlorid-Lösung, kann die Gelierung sowohl von Innen als auch von aussen erfolgen.

Wenigstens eine der wässrigen Lösungen beim Aufbringen der Hülle umfasst einen Kristallisationsverzögerer. Ein Kristallisationsverzögerer verhindert oder verzögert zumindest die Ausbildung von Kristallen auf der Kapseloberfläche. Zusätzlich oder alternativ kann die Hülle hydrophobiert werden, so dass eine verstärkte Schutzschicht entsteht, die verhindert, dass sich auf der Oberfläche der Kapsel Kristalle bilden.

Ein weiterer Aspekt der vorliegenden Erfindung betrifft ein Verfahren zum Herstellen einer Kapsel, insbesondere einer Kapsel wie vorgängig beschrieben. Dabei umfasst das Verfahren wenigstens die folgenden Schritte:
- Bereitstellen eines Kernmaterials, vorzugsweise in Form eines Presslings,
- Bereitstellen einer Hülle in Form einer Folie oder eines zwei- oder mehrteiligen Kapselkörpers,
- Umschliessen des Kernmaterial mit der Hülle,

Dabei umfasst die Hülle einen Kristallisationsverzögerer und/oder die Hülle ist hydrophobiert.

Das Umschliessen des Kernmaterials mit einer folienförmigen Hülle kann ähnlich wie beim Verpacken von Pralinen erfolgen und ist besonders einfach zu bewerkstelligen. Wenn das Kernmaterial als loses Schüttgut vorliegt, kann auch eine vorbestimmte Menge auf der Folie abgelegt werden und die Folie wird anschliessend um das Schüttgut geschlossen, so dass das Kernmaterial mit der Hülle umschlossen wird. Ebenso kann aus der Folie beispielsweise ein Beutel, ähnlich einem Teebeutel, hergestellt werden, welche dann befüllt und verschlossen wird. Wiederum ist das Kernmaterial mit der Hülle umschlossen. Die Hülle kann dabei auf Alginat basieren. Eine Hülle in Form eines zwei- oder mehrteiligen Kapselkörpers kann beispielsweise hergestellt sein wie in EP23219294.8 beschrieben. Eine solche Hülle eignet sich insbesondere für ein Kernmaterial als Schüttgut, kann jedoch auch für ein kompaktiertes Kernmaterial verwendet werden. Der Kristallisationsverzögerer und/oder die Hydrophobierung kann in der Hüllenstruktur eingebarbeitet sein oder als separate Schicht aufgebracht werden.

Kristallisationsverzögerer, wie Chlorogensäuren, Zitronensäure, Apfelfasern, Hydropxypropylmethylcellulose oder Polyole, sind mittels einer wässrigen Lösung zum Aufbringen der Hülle beizumischen oder können auch selbst eine wässrige Lösung bilden, welche separat aufgebracht wird. Ausserdem sind diese lebensmittelverträglich und haben keinen wesentlichen Einfluss auf die Hülle. Insbesondere wird deren Bruchfestigkeit und die Bedingungen für die Trocknung der Kapsel nicht negativ beeinflusst. Ebenso wird weder der Geschmack noch das Aussehen eines aus der Kapsel zubereiteten Getränks beeinflusst.

Die Hydrophobierung kann beispielsweise in Form einer Wachspolitur, insbesondere Carnaubawachs, Bienenwachs und/oder Reiskleiewachs erfolgen. Diese Wachse sind natürliche Produkte und in der Lebensmittel- und Kosmetikindustrie, sowie in der Verwendung von Medikamenten bekannt. Wachse sind in Wasser unlöslich. Ausserdem sind sie unverdaulich und würden bei Verzehr auf natürlichem Wege wieder ausgeschieden. Entsprechend ist eine Hydrophobierung der Kapseloberfläche mit natürlichen Wachsen unbedenklich. Ebenso kann eine Hydrophobierung auch durch Zusatz bestimmter Lipide, durch eine anorganische Barriere und/oder durch Polymer-Grafting erfolgen. Durch die Hydrophobierung wird die Hülle höchstens unwesentlich beeinflusst. Die Bruchfestigkeit der Hülle bleibt erhalten, auch der Geschmack und das Aussehen eines aus der Kapsel zubereiteten Getränks wird nicht entscheidend verändert. Zudem verstärkt die Hydrophobierung die Gasbarriereeigenschaften der Beschichtung, was die sensorische Haltbarkeit verbessert. Entsprechend werden die Anforderungen an eine Wasserdampfbarriere der Sekundärverpackung minimiert und es können sich weitere Vorteile zeigen. So kann beispielsweise durch einen eingeschränkten Feuchtigkeitsaustausch auch die Sichtbarkeit einer CO₂- oder UV-Laserbeschriftung in der Beschichtung über längere Zeit gewährleistet werden. Eine solche Laser-Beschriftung basiert auf einem Farbumschlag in der Hülle, welcher bei einer Feuchtigkeitsaufnahme und oder bei Feuchtigkeitsschwankungen in der Hülle zum Verblassen neigt.

Ein weiterer Aspekt der vorliegenden Erfindung betrifft die Verwendung einer Kapsel, wie vorgängig beschrieben, zur Zubereitung eines Getränks, insbesondere Heiss- und oder Kaltgetränks. Dabei kann das Getränk ausgewählt sein aus den Getränkegruppen Kaffee, Tee, Kaffee-Ersatz, Kakao, Trinkschokolade, Milch, vegane Milchalternativen, Proteindrinks, Nahrungsergänzungsmittel oder Suppe, oder Kombinationen davon.

Die Zubereitung des Getränks kann durch Extraktion der Kapsel mit einer insbesondere heissen oder kalten Flüssigkeit wie Wasser oder Milch erfolgen.

Anhand von Beispielen, welche lediglich Ausführungsbeispiele darstellen, wird die Erfindung im Folgenden näher erläutert. Dabei wurde die Kristallisation über mehrere Tage optisch bewertet:

### BEISPIEL 1

Gemäss einem ersten Beispiel wurde eine 1.55 % (w/w)ige Alginat-Lösung hergestellt, die zusätzlich 1.1 % (w/w) Cellulose und 9.3 % (w/w) Sorbitol enthielt. Ausserdem enthielt diese Lösung 0.1 % (w/w) Chlorogensäuren-haltiges Grünkaffee-Extrakt (entkoffeiniert) .

Zur Herstellung einer Kapsel diente ein kugelförmiger Pressling, welcher aus 5.9 g Kaffeepulver mit einem Pressstempel hergestellt wurde und eine Beschichtung bestehend aus zwei Schichten aufweist.

Für jede Beschichtung wurde der Pressling zunächst für 10 s in die wässrige Alginat-Lösung getaucht und anschliessend für 6 sec in 10% (w/w)ige Calciumchlorid-Lösung gegeben und im Anschluss mit Wasser abgespült.

Der so erhaltene beschichtete Pressling wurde nach der ersten Beschichtung für 18 min bei 75°C in einem Trocknungsofen unter aktiver Entfeuchtung der Trocknungsluft getrocknet und im Anschluss ein weiteres Mal mit der bereitgestellten Alginat-Lösung und der Calciumchlorid-Lösung beschichtet und mit Wasser abgespült. Daraufhin erfolgte die zweite Trocknung für 1 h bei 75°C im Trocknungsofen unter aktiver Entfeuchtung der Trocknungsluft bis auf 5% (w/w) Restfeuchte. Nach Ende der Trocknungszeit wurde der beschichtete getrocknete Pressling bei Raumtemperatur im Exsikkator abgekühlt.

Im offenen Kristallisations-Lagertest bei Umgebungsbedingungen (23 °C, 50 % relative Luftfeuchtigkeit) im Labor wurde die Kristallisation anhand des oben erwähnten Stufenschemas über eine längere Zeit aufgezeichnet. Im Vergleich zu beschichteten Presslingen mit einer Beschichtung ohne Chlorogensäuren-haltiges Grünkaffee-Extrakt konnte die Bildung von Koffeinkristallen auf der Oberfläche durch den Einsatz von Chlorogensäuren-haltigem Grünkaffee-Extrakt über einen Zeitraum von 122 Tagen komplett verhindert werden, wie in der nachfolgenden Tabelle dargestellt ist. Es hat sich gezeigt, dass die Referenz, also eine identisch hergestellte Kapsel, deren Alginat-Lösung nicht mit Chlorogensäuren-haltigem Grünkaffee-Extrakt versetzt ist, bereits nach wenigen Tagen eine fortschreitende Kristallisation auf der Kapseloberfläche erkennen lässt.

| Zeitdauer [Tage] | Kristallisationsstufe Referenz | Kristallisationsstufe Beispiel 1 |
|---|---|---|
| 4 | 0 | 0 |
| 21 | 2 | 0 |
| 35 | 3 | 0 |
| 48 | 4 | 0 |
| 74 | 4 | 0 |
| 90 | 4 | 0 |
| 122 | 4 | 0 |

### BEISPIEL 2

Gemäss einem zweiten Beispiel wurde wiederum eine 1.55 % (w/w)ige Alginat-Lösung hergestellt, die zusätzlich 1.1 % (w/w) Cellulose und 9.3 % (w/w) Sorbitol enthielt. Zusätzlich wurde eine wässrige 20% (w/w) Zitronensäurelösung bereitgestellt.

Zur Herstellung einer Kapsel diente wiederum ein kugelförmiger Pressling, welcher aus 5.9 g Kaffeepulver mit einem Pressstempel hergestellt wurde. Der so hergestellte Pressling wurde zunächst mit 0.05 g Calciumlactatpulver bestäubt und anschliessend herkömmlich mit drei Schichten beschichtet.

Für jede Beschichtung wurde der Pressling zunächst in die wässrige Alginat-Lösung mit 1.1 % (w/w) Cellulose und 9.3 % (w/w) Sorbitol für 10 s getaucht und anschliessend für 6 s in 10% (w/w)iger Calciumchlorid-Lösung gegeben. Anschliessend wurde der Pressling für 2 s in die 20% (w/w) Zitronensäurelösung getaucht und im Anschluss mit Wasser abgespült.

Der so erhaltene beschichtete Pressling wurde nach der ersten und zweiten Beschichtung für 18 min bei 75°C in einem Trocknungsofen unter aktiver Entfeuchtung der Trocknungsluft getrocknet und im Anschluss ein weiteres Mal mit der bereitgestellten Alginat-Lösung, der Calciumchlorid-Lösung und der Zitronensäure beschichtet und mit Wasser abgespült. Daraufhin erfolgte die dritte Trocknung für 2 h bei 75°C im Trocknungsofen unter aktiver Entfeuchtung der Trocknungsluft bis auf 5% (w/w) Restfeuchte getrocknet. Nach Ende der Trocknungszeit wurde der beschichtete getrocknete Pressling bei Raumtemperatur im Exsikkator abgekühlt.

Im offenen Kristallisations-Lagertest bei Umgebungsbedingungen (23 °C, 50 % relative Luftfeuchtigkeit) im Labor zeigte bei auf diese Weise hergestellten beschichteten Presslingen im Vergleich zu einer Referenz (beschichteter Pressling mit einer Beschichtung ohne Zitronensäure) selbst über 269 Tage keine Kristallisation, wie in der nachfolgenden Tabelle dargestellt ist. Wiederum zeigt die Referenz, also eine identisch hergestellte Kapsel, deren Hülle nicht mit Zitronensäure versetzt ist, bereits nach wenigen Tagen eine fortschreitende Kristallisation auf der Kapseloberfläche.

| Zeitdauer [Tage] | Referenz | Beispiel 2 |
|---|---|---|
| 21 | 2 | 0 |
| 66 | 4 | 0 |
| 88 | 4 | 0 |
| 150 | 4 | 0 |
| 158 | 5 | 0 |
| 165 | 5 | 0 |
| 171 | 5 | 0 |
| 181 | 5 | 0 |
| 186 | 5 | 0 |
| 241 | 5 | 0 |
| 248 | 5 | 0 |
| 269 | 5 | 0 |

### BEISPIEL 3

Gemäss einem dritten Beispiel wurde wiederum eine 1.55 % (w/w)ige Alginat-Lösung hergestellt, die zusätzlich 1.1 % (w/w) Cellulose und 9.3 % (w/w) Sorbitol enthielt. Ausserdem enthielt die Lösung 1% (w/w) Apfelfaser.

Die Herstellung der Kapsel erfolgte identisch wie in Beispiel 1, wobei Apfelfaser anstelle des Chlorogensäuren-haltigen Grünkaffee-Extrakts verwendet wurde.

Im offenen Kristallisations-Lagertest bei Umgebungsbedingungen (23 °C, 50 % relative Luftfeuchtigkeit) im Labor zeigte sich bei den auf diese Weise hergestellten beschichteten Presslingen im Vergleich zu einer Referenz (beschichteten Pressling mit einer Beschichtung ohne Apfelfaser) während 102 Tagen keine Kristallisation, wie in der nachfolgenden Tabelle dargestellt ist.

| Zeitdauer [Tage] | Referenz | Beispiel 3 |
|---|---|---|
| 18 | 1 | 0 |
| 31 | 2 | 0 |
| 57 | 4 | 0 |
| 73 | 4 | 0 |
| 102 | 4 | 0 |

### BEISPIEL 4

Gemäss einem vierten Beispiel wurde wiederum eine 1.55 % (w/w)ige Alginat-Lösung hergestellt, die zusätzlich 9.3 % (w/w) Sorbitol enthielt. Ausserdem enthielt die Lösung 1.75% (w/w) Hydroxypropylmethylcellulose (HPMC).

Die Herstellung der Kapsel erfolgte identisch wie in Beispiel 1, wobei Hydroxypropylmethylcellulose (HPMC) anstelle des Chlorogensäuren-haltigen Grünkaffee-Extrakts verwendet wurde.

Im offenen Kristallisations-Lagertest bei Umgebungsbedingungen (23 °C, 50 % relative Luftfeuchtigkeit) im Labor zeigte sich bei den auf diese Weise hergestellten beschichteten Presslingen im Vergleich zur Referenz (beschichteter Pressling mit einer Beschichtung ohne Hydroxypropylmethylcellulose (HPMC)) während 94 Tagen keine Kristallisation, wie in der nachfolgenden Tabelle dargestellt ist.

| Zeitdauer [Tage] | Referenz | Beispiel 4 |
|---|---|---|
| 10 | 0 | 0 |
| 28 | 2 | 0 |
| 50 | 4 | 0 |
| 67 | 4 | 0 |
| 81 | 4 | 0 |
| 94 | 4 | 0 |

### BEISPIEL 5

Gemäss einem fünften Beispiel wurde wiederum eine 1.55 % (w/w)ige Alginat-Lösung hergestellt, die zusätzlich 1.1 % (w/w) Cellulose und 9.3 % (w/w) Sorbitol enthielt.

Zur Herstellung einer Kapsel diente wiederum ein kugelförmiger Pressling, welcher aus 5.9 g Kaffeepulver mit einem Pressstempel hergestellt wurde und eine Beschichtung bestehend aus zwei Schichten aufweist.

Für jede Beschichtung wurde der Pressling zunächst in die wässrige Alginat-Lösung mit 1.1 % (w/w) Cellulose und 9.3 % (w/w) Sorbitol für 10 s getaucht und anschliessend für 6 sec in 10% (w/w)iger Calciumchlorid-Lösung gegeben und im Anschluss mit Wasser abgespült.

Der so erhaltene beschichtete Pressling wurde nach der ersten Beschichtung für 18 min bei 75°C in einem Trocknungsofen unter aktiver Entfeuchtung der Trocknungsluft getrocknet und im Anschluss ein weiteres Mal mit der bereitgestellten Alginat-Lösung und der Calciumchlorid-Lösung beschichtet und mit Wasser abgespült. Daraufhin erfolgte die zweite Trocknung für 1 h bei 75°C im Trocknungsofen unter aktiver Entfeuchtung der Trocknungsluft bis auf 5% (w/w) Restfeuchte getrocknet. Im Anschluss an die Beschichtung mit Alginat wurde eine hydrophobe Schicht Carnaubawachs auf die noch heissen getrockneten Presslinge aufgebracht. Hierzu wurde der noch heisse Pressling mit einem mit geschmolzenem Carnaubawachs getränkten Stofftuch abgerieben, sodass 0.1 g Carnaubawachs auf der Presslingoberfläche gleichmässig verteilt wurde. Anschliessend wurde der beschichtete getrocknete und versiegelte Pressling bei Raumtemperatur im Exsikkator abgekühlt. Im offenen Kristallisations-Lagertest bei Umgebungsbedingungen (23 °C, 50 % relative Luftfeuchtigkeit) im Labor zeigte sich bei den auf diese Weise hergestellten beschichteten und versiegelten Presslingen im Vergleich zum lediglich beschichteten Pressling eine verminderte Kristallisation, wie in der nachfolgenden Tabelle dargestellt ist. Wiederum zeigt die Referenz, also eine identisch hergestellte Kapsel ohne Versiegelung bereits nach wenigen Tagen eine fortschreitende Kristallisation auf der Kapseloberfläche.

| Zeitdauer [Tage] | Referenz | Beispiel 5 |
|---|---|---|
| 7 | 0 | 0 |
| 14 | 1 | 0 |
| 21 | 2 | 0 |
| 28 | 2 | 0 |
| 45 | 4 | 1 |
| 64 | 4 | 1 |
| 79 | 4 | 2 |

## Patentansprüche

1. Kapsel zur Getränkezubereitung umfassend ein Kernmaterial, insbesondere umfassend einen Pulverpressling, und eine Hülle, wobei das Kernmaterial und/oder die Hülle kristallisierbare Stoffe enthält, wobei die Hülle einen Kristallisationsverzögerer umfasst, insbesondere ausgewählt aus der Gruppe umfassend Chlorogensäuren, Zitronensäure, Apfelfasern, Hydroxypropylmethylcellulose (HPMC), Polyole, und/oder die Hülle hydrophobiert ist.

2. Kapsel nach Anspruch 1, wobei die Hülle hydrophobiert ist, durch eine Wachspolitur und/oder durch den Zusatz bestimmter Lipide und/oder durch eine anorganische Barriere und/oder durch Polymer-Grafting.

3. Kapsel nach Anspruch 1 oder 2, wobei die Hülle in einem Nassauftrag aufgebracht ist.

4. Kapsel nach einem der vorhergehenden Ansprüche, wobei die Hülle auf Alginat basiert.

5. Kapsel nach einem der vorhergehenden Ansprüche, wobei das Kernmaterial ein Pulver oder eine Pulvermischung aufweist, ausgewählt aus der Gruppe umfassend: Kaffee, Kaffeemischungen, Kaffeeersatzmischungen, Tee, Teemischungen, Kakao, Kakaomischungen, Trinkschokolade, Milchpulver, Milchkaffeemischungen, Fruchtmilch, veganer Milchersatz, Instantkaffee, Kaffee-Ersatz-Produkte und Trockensuppe, und Kombinationen davon.

6. Kapsel nach einem der vorhergehenden Ansprüche, wobei die Kapsel kompostierbar, insbesondere heimkompostierbar gemäss den Zertifizierungsprogrammen NF T 51-800 und AS 5810, ist.

7. Kapsel nach einem der vorhergehenden Ansprüche, wobei die Kapsel eine Form aufweist, ausgewählt aus der Gruppe Kugel, Ellipsoid, Würfel, Quader, Zylinder, Linse, Prisma, Kegel, Kegelstumpf, Pyramide, Pyramidenstumpf, Torus, Tetraeder, Oktaeder, Dodekaeder, Ikosaeder und Kaffeebohne.

8. Kapsel nach einem der vorhergehenden Ansprüche, wobei die Kapsel in trockenem Zustand eine maximale Kraft in einem Bruchfestigkeitstest von mindestens 30 N, bevorzugt mindestens 50 N und besonders bevorzugt mindestens 80 N aufweist.

9. Kapsel nach einem der vorhergehenden Ansprüche, wobei die Hülle eine Dicke von mindestens 50 µm, bevorzugt mindestens 80 pm und besonders bevorzugt mindestens 100 pm im getrockneten Zustand, aufweist.

10. Kapsel nach einem der vorhergehenden Ansprüche, wobei die Hülle wenigstens eine Schicht umfassend mindestens ein Polysaccharid aufweist, ausgewählt aus der Gruppe bestehend aus: Alginate, Stärken, modifizierte Stärken, Cellulosen, Chitin, Chitosan, Carragenen, Pektine, Agar, Xanthan, Gellan, Dextrane, Galactomannan, Glucomannan, Guaran, Carubin, Gummi Arabicum, Scleroglucan, Pullulan, Derivate oder Mischungen davon.

11. Kapsel nach einem der vorhergehenden Ansprüche, wobei die Hülle Fasern enthält, vorzugsweise ausgewählt aus der Gruppe bestehend aus: Alginat-Fasern, Cellulose-Fasern; Viskose-Fasen; PLA-Fasern; mineralische Fasern, vorzugsweise aus Siliziumdioxid; Kunststoffasern, vorzugsweise Aramid-, Polyethylen- und Polyamid-Fasern; oder Derivate davon.

12. Verfahren zum Herstellen einer Kapsel, insbesondere eine Kapsel gemäss einem der vorhergehenden Ansprüche, umfassend die Schritte:
- Bereitstellen eines Kernmaterials, vorzugsweise in Form eines Presslings,
- Aufbringen einer Hülle durch Eintauchen des Kernmaterials in wenigstens eine wässrige Lösung oder durch Überziehen oder Besprühen des Kernmaterials mit wenigstens einer wässrigen Lösung,
- Trocknen des Kernmaterials und der aufgebrachten Hülle,
wobei wenigstens eine der wässrigen Lösungen einen Kristallisationsverzögerer umfasst und/oder die Hülle, insbesondere nach dem Trocknen, hydrophobiert wird.

13. Verfahren zum Herstellen einer Kapsel, insbesondere eine Kapsel gemäss einem der vorhergehenden Ansprüche, umfassend die Schritte:
- Bereitstellen eines Kernmaterials, vorzugsweise in Form eines Presslings,
- Bereitstellen einer Hülle in Form einer Folie oder eines zwei- oder mehrteiligen Kapselkörpers,
- Umschliessen des Kernmaterial mit der Hülle,
wobei die Hülle einen Kristallisationsverzögerer umfasst und/oder die Hülle hydrophobiert ist.

14. Verfahren nach Anspruch 12 oder 13, wobei der Kristallisationsverzögerer ausgewählt ist aus der Gruppe umfassend Chlorogensäuren, Zitronensäure, Apfelfasern, Hydroxypropylmethylcellulose (HPMC), Polyole.

15. Verfahren nach einem der Ansprüche 12 bis 14, wobei die Hydrophobierung durch ein Wachs, insbesondere Carnaubawachs, Bienenwachs oder Reiskleiewachs und/oder durch Zusatz bestimmter Lipide und/oder durch eine anorganische Barriere und/oder durch Polymer-Grafting erfolgt.

16. Verwendung einer Kapsel gemäss einem der Ansprüche 1 bis 11 zur Zubereitung eines Getränks, insbesondere Kalt- und/oder Heissgetränks, ausgewählt aus den Getränkegruppen Kaffee, Tee, Kaffee-Ersatz, Kakao, Trinkschokolade, Milch, vegane Milchalternativen, Proteindrinks, Nahrungsergänzungsmittel oder Suppe, oder Kombinationen davon.

17. Verwendung nach Anspruch 16, wobei die Zubereitung des Getränks durch Extraktion der Kapsel mit einer insbesondere kalten oder heissen Flüssigkeit ausgewählt aus der Gruppe bestehend aus Wasser und Milch erfolgt.
